# EUROPEAN PATENT APPLICATION

(11) **EP 4 732 913 A1**
(43) Date of publication of application: **29.04.2026**
(21) Application number: 24825257.9
(22) Date of filing: 19.06.2024
(51) Int. Cl.: A62C 19/00, A62C 37/00, B64D 1/04, F42C 11/00, F42C 9/00, B64U 101/47, G05B 19/042

(54) **AIRCRAFT, AND FIRE EXTINGUISHING BOMB CONTROL SYSTEM AND BOMB-BORNE END DETONATION DEVICE THEREOF**

(30) Priority: 21.06.2023 CN 202321594870 U
(71) Applicant: Autoflight (Kunshan) Co., Ltd., Suzhou, Jiangsu 215345 (CN)
(72) Inventor: TIAN, Yu, Suzhou, Jiangsu 215345 (CN); SHAO, Mingming, Suzhou, Jiangsu 215345 (CN)
(74) Representative: MERH-IP Matias Erny Reichl Hoffmann Patentanwälte PartG mbB
(86) International application number: PCT/CN2024/100037
(87) International publication number: WO 2024/260363

(57) **Abstract**

The present disclosure relates to the technical field of UAV firefighting and discloses an aircraft, a fire extinguishing bomb control system, and a bomb-mountable detonation device thereof. The bomb-mountable detonation device of the present disclosure comprises a power supply module, a communication module, and a detonation signal transmission module, wherein the power supply module is configured to power the bomb-mountable detonation device; the communication module comprises a timer and is configured to establish a communication connection with the aircraft and to start a timer countdown when a first trigger condition is met; and the detonation signal transmission module is configured to output a detonation current signal upon completion of the timer countdown when the power supply module is energized and a second trigger condition is met. The bomb-mountable detonation device of the present disclosure detonates the fire extinguishing bomb through a multi-verification mechanism, effectively preventing accidental operation.

## Description

### FIELD OF THE DISCLOSURE

The present disclosure relates to the technical field of UAV (Unmanned Aerial Vehicle) firefighting, and in particular, to an aircraft, a fire extinguishing bomb control system, and a bomb-mountable detonation device thereof.

### BACKGROUND OF THE INVENTION

Current fire extinguishing bombs on the market are generally equipped with electronic fuses that incorporate a delay module within their circuitry. These electronic fuses feature two resilient conductive strips separated by an inserted insulating sheet. A pull ring is connected to this insulating sheet. Once the ring is pulled out, the electronic fuse circuit is completed, triggering detonation. A small amount of explosives surrounds the electronic fuse, which is in turn surrounded by fire-extinguishing agents. It is common practice to use the electronic fuse to ignite the explosives, thereby dispersing the surrounding extinguishing material. However, the safety mechanisms of existing fire extinguishing bombs have vulnerabilities, as the electronic fuses may be accidentally triggered during transportation or loading.

### SUMMARY OF THE INVENTION

The object of the present disclosure is to provide an aircraft, a fire extinguishing bomb control system, and a bomb-mountable detonation device thereof. The bomb-mountable detonation device of the present disclosure detonates the fire extinguishing bomb through a multi-verification mechanism, effectively preventing accidental operation.

To solve the above technical problem, the present invention provides a bomb-mountable detonation device, comprising: a power supply module, a communication module, and a detonation signal transmission module, wherein the power supply module is configured to power the bomb-mountable detonation device; the communication module comprises a timer and is configured to establish a communication connection with the aircraft and to start a countdown of the timer when a first trigger condition is met; and the detonation signal transmission module is configured to output a detonation current signal upon completion of the timer countdown when the power supply module is energized and a second trigger condition is met.

Further, the present invention provides a fire extinguishing bomb control system, comprising the bomb-mountable detonation device according and an airborne device, wherein the bomb-mountable detonation device is mountable on the fire extinguishing bomb, and the airborne device is mountable on the aircraft and is configured to set a delayed detonation time value, thereby determining the timer countdown of the communication module.

Further, the present invention provides an aircraft, comprising the fire extinguishing bomb control system.

Preferably, the first trigger condition is met when the communication module is disconnected from the aircraft.

Preferably, the communication module is connectable to the aircraft via a communication interface cable, and the first trigger condition is met when the communication interface cable is disconnected from the communication module.

Preferably, the detonation signal transmission module is connectable to a safety pin, and the second trigger condition is met when the safety pin is disconnected from the detonation signal transmission module.

Preferably, the communication interface cable and the safety pin are simultaneously disconnected from the bomb-mountable detonation device under the effect of gravity after the fire extinguishing bomb is dropped.

Preferably, the power supply module comprises a power switch, and the power supply module powers the bomb-mountable detonation device on or off by toggling settings of the power switch.

Preferably, the airborne device obtains the delayed detonation time value based on a current altitude of the aircraft and a preset detonation altitude value.

Preferably, the airborne device comprises a laser ranging module, and the current altitude of the aircraft is measured by the laser ranging module.

The bomb-mountable detonation device of the present disclosure detonates the fire extinguishing bomb through a multi-verification mechanism, effectively preventing accidental operation.

### BRIEF DESCRIPTION OF DRAWINGS

FIG. 1 shows a block diagram of a bomb-mountable detonation device according to an embodiment of the present invention;
FIG. 2 shows a block diagram of an airborne device according to an embodiment of the present invention;
FIG. 3 shows a block diagram of a fire extinguishing bomb control system according to an embodiment of the present invention.

### DETAILED DESCRIPTION

The following embodiments further illustrate the technical solutions of the present invention. It can be understood that the specific embodiments described herein are only used to explain the present invention. Additionally, it should be noted that, for ease of description, the drawings only show parts related to the present invention and not all parts.

In the description of the present invention, unless otherwise specified, terms such as "install", "connect", and "attach" should be interpreted broadly. For example, connections may be fixed or detachable, mechanical or electrical, direct or indirect via intermediate components, or internal connections between two elements. Those skilled in the art can understand the specific meanings of these terms in the present invention based on the context.

In the present invention, unless otherwise specified and defined, the first feature being "on" or "under" the second feature may include the first and second features being in direct contact, or may include the first and second features not being in direct contact but being in contact through additional features between them. Moreover, the first feature being "on", "above", or "over" the second feature includes the first feature being directly above or obliquely above the second feature, or merely indicates that the horizontal height of the first feature is higher than that of the second feature. The first feature being "under", "below", or "beneath" the second feature includes the first feature being directly below or obliquely below the second feature, or merely indicates that the horizontal height of the first feature is lower than that of the second feature.

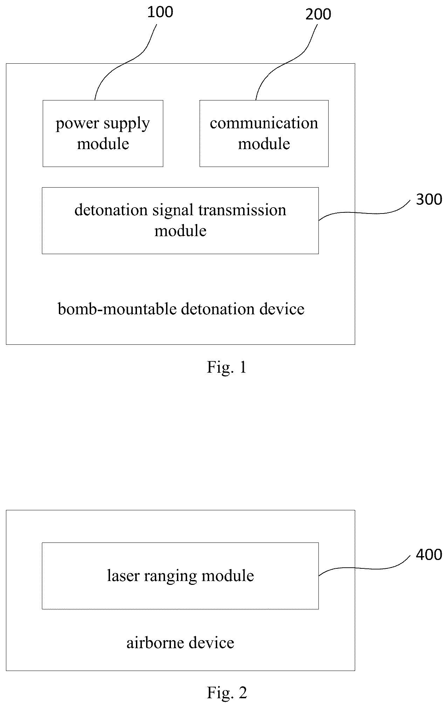

The embodiments of this disclosure are described below with reference to the drawings. As shown in Figure 1, the present disclosure provides a bomb-mountable detonation device, which is mountable at the upper end of a fire extinguishing bomb and is configured to detonate the fire extinguishing bomb droppable by an aircraft. The bomb-mountable detonation device comprises: a power supply module 100, a communication module 200, and a detonation signal transmission module 300. The power supply module 100 is configured to power the bomb-mountable detonation device; the communication module 200 comprises a timer and is configured to establish a communication connection with the aircraft and to start a timer countdown when a first trigger condition is met; the detonation signal transmission module 300 is configured to output a detonation current signal upon completion of the timer countdown when the power supply module 100 is energized and a second trigger condition is met.

Specifically, the power supply module 100 comprises a power switch, and the power supply module 100 powers the bomb-mountable detonation device on or off by toggling the settings of the power switch. The settings of the power switch include, but are not limited to, ON and OFF. When the power switch is toggled to ON, the bomb-mountable detonation device is powered on, and when the power switch is toggled to OFF, the bomb-mountable detonation device is powered off. When the fire extinguishing bomb is in a transportation or storage state, accidental triggering of the detonation device can be prevented by placing the power switch in the OFF position. The first trigger condition is met when the communication module 200 is disconnected from the aircraft. Specifically, the communication module 200 is connectable to the aircraft via a communication interface cable, with one end of the communication interface cable plugged into the aircraft and the other end plugged into the communication module 200, and the communication interface cable is fixedly connected to the aircraft. When the fire extinguishing bomb is dropped, the communication interface cable is disconnected from the communication module 200 of the bomb-mountable detonation device due to the effect of the fire extinguishing bomb's weight, at which point the communication module 200 starts the timer countdown.

Furthermore, the detonation signal transmission module 300 is connectable to a safety pin, and the second trigger condition is met when the safety pin is disconnected from the detonation signal transmission module 300. Specifically, when the power supply module 100 is energized and the safety pin is disconnected from the detonation signal transmission module 300 of the bomb-mountable detonation device, the detonation signal transmission module 300 will only output a detonation current signal after the timer countdown has finished. That is to say, if the safety pin is not separated from the bomb-mountable detonation device, the detonation signal transmission module 300 cannot successfully output a detonation current signal, thereby preventing accidental explosion of the fire extinguishing bomb. Preferably, the communication interface cable and the safety pin are simultaneously disconnected from the bomb-mountable detonation device under the effect of gravity after the fire extinguishing bomb is released. Specifically, the communication interface cable and the safety pin can be bundled and secured to the aircraft. Once the fire extinguishing bomb is dropped, both are disconnected from the bomb-mountable detonation device simultaneously due to gravity, causing the communication module 200 to start the timer countdown and to output a detonation current signal when the countdown ends, thereby successfully detonating the fire extinguishing bomb at a preset height. Using these mechanical trigger conditions to send the detonation signal eliminates reliance on electronic fuses composed of numerous electronic components and circuits, resulting in better reliability.

The airborne device determines the delayed detonation time value based on the current altitude of the aircraft and a preset detonation altitude value. Specifically, as shown in Figure 2, the airborne device comprises a laser ranging module 400, and the current altitude of the aircraft is measured by the laser ranging module 400. The altitude difference, obtained by subtracting the preset detonation altitude value from the current altitude of the aircraft, represents the vertical displacement occurring during the free fall of the fire extinguishing bomb under the influence of gravity within the delayed detonation time. Thus, the delayed detonation time value is calculated based on the gravitational acceleration of the fire extinguishing bomb by the formula: the delayed detonation time T equals the square root of twice the altitude difference h divided by gravitational acceleration g.

It should be noted that for water-based fire extinguishing bombs, it is recommended to set a detonation altitude value of no less than 6 meters. For dry powder fire extinguishing bombs, it is recommended to set a detonation altitude value of no less than 8 meters to achieve optimal fire extinguishing effectiveness.

In other embodiments, the preset detonation altitude value can also be manually set remotely via a control panel corresponding to the airborne device. The settings can be manually adjusted on the control panel using "+" and "-" buttons.

The bomb-mountable detonation device of the present disclosure detonates the fire extinguishing bomb through a multi-verification mechanism, effectively preventing accidental operation.

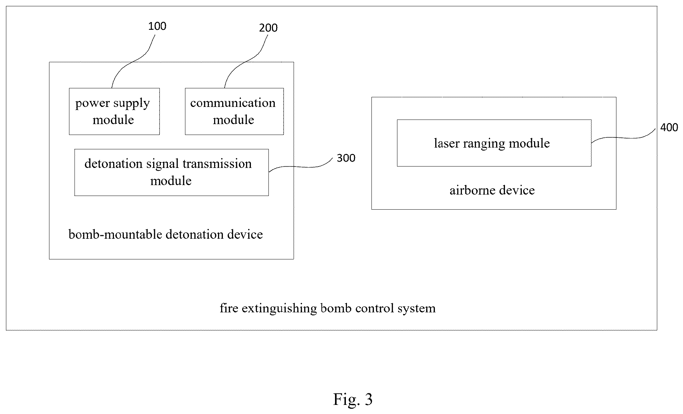

The present disclosure provides a fire extinguishing bomb control system, as shown in Figure 3, which comprises the aforementioned bomb-mountable detonation device and the airborne device. The bomb-mountable detonation device is mountable at the top of the fire extinguishing bomb, and the airborne device is mountable on the aircraft and is configured to set the delayed detonation time value, thereby determining the timer countdown for the communication module 200. The bomb-mountable detonation device of the fire extinguishing bomb control system of the present disclosure detonates the fire extinguishing bomb through a multi-verification mechanism, effectively preventing accidental operation.

The present disclosure provides an aircraft, which comprises the aforementioned fire extinguishing bomb control system. The bomb-mountable detonation device of the fire extinguishing bomb control system of the aircraft of the present disclosure detonates the fire extinguishing bomb through a multi-verification mechanism, effectively preventing accidental operation.

The above embodiments are only illustrative of the principles and effects of the present invention. Anyone skilled in the art may modify or change the above embodiments without departing from the purpose of the present invention. Therefore, all equivalent modifications or changes made by those skilled in the art without departing from the disclosed purpose of the present invention shall fall within the scope of the claims of the present invention.

## Claims

1. A bomb-mountable detonation device for detonating a fire extinguishing bomb to be dropped by an aircraft, comprising:
a power supply module (100), a communication module (200), and a detonation signal transmission module (300), wherein the power supply module (100) is configured to power the bomb-mountable detonation device; the communication module (200) comprises a timer and is configured to establish a communication connection with the aircraft and to start a countdown of the timer when a first trigger condition is met; and the detonation signal transmission module (300) is configured to output a detonation current signal upon completion of the timer countdown when the power supply module (100) is energized and a second trigger condition is met.

2. The bomb-mountable detonation device according to claim 1, wherein the first trigger condition is met when the communication module (200) is disconnected from the aircraft.

3. The bomb-mountable detonation device according to claim 1, wherein the communication module (200) is connectable to the aircraft via a communication interface cable, and the first trigger condition is met when the communication interface cable is disconnected from the communication module (200).

4. The bomb-mountable detonation device according to claim 3, wherein the detonation signal transmission module (300) is connectable to a safety pin, and the second trigger condition is met when the safety pin is disconnected from the detonation signal transmission module (300).

5. The bomb-mountable detonation device according to claim 4, wherein the communication interface cable and the safety pin are simultaneously disconnected from the bomb-mountable detonation device under the effect of gravity after the fire extinguishing bomb is dropped.

6. The bomb-mountable detonation device according to claim 1, wherein the power supply module (100) comprises a power switch, and the power supply module (100) powers the bomb-mountable detonation device on or off by toggling settings of the power switch.

7. A fire extinguishing bomb control system, comprising the bomb-mountable detonation device according to any one of claims 1 to 6 and an airborne device, wherein the bomb-mountable detonation device is mountable on the fire extinguishing bomb, and the airborne device is mountable on the aircraft and is configured to set a delayed detonation time value, thereby determining the timer countdown of the communication module (200).

8. The fire extinguishing bomb control system according to claim 7, wherein the airborne device obtains the delayed detonation time value based on a current altitude of the aircraft and a preset detonation altitude value.

9. The fire extinguishing bomb control system according to claim 7, wherein the airborne device comprises a laser ranging module (400), and the current altitude of the aircraft is measured by the laser ranging module (400).

10. An aircraft, comprising the fire extinguishing bomb control system according to any one of claims 7 to 9.
